(19) Europäisches Patentamt
European Patent Office
Office européen des brevets

(11) **EP 3 409 807 B1**

(12) # EUROPEAN PATENT SPECIFICATION

(45) Date of publication and mention of the grant of the patent:
**04.03.2020   Bulletin 2020/10**

(51) Int Cl.:
*C22C 38/00* (2006.01)  *C21D 9/46* (2006.01)
*C22C 38/14* (2006.01)  *C22C 38/60* (2006.01)
*C23C 2/02* (2006.01)  *C23C 2/06* (2006.01)
*C23C 2/28* (2006.01)  *C23C 2/40* (2006.01)

(21) Application number: **17744285.2**

(22) Date of filing: **26.01.2017**

(86) International application number:
**PCT/JP2017/002616**

(87) International publication number:
**WO 2017/131055 (03.08.2017 Gazette 2017/31)**

(54) **HIGH-YIELD RATIO HIGH-STRENGTH GALVANIZED STEEL SHEET, AND METHOD FOR PRODUCING SAME**

HOCHFESTES VERZINKTES STAHLBLECH MIT HOHEM STRECKGRENZENVERHÄLTNIS UND VERFAHREN ZUR HERSTELLUNG DAVON

TÔLE D'ACIER GALVANISÉ HAUTE RÉSISTANCE À RAPPORT D'ÉLASTICITÉ ÉLEVÉ ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2016   JP 2016013205**
**23.01.2017   JP 2017009277**

(43) Date of publication of application:
**05.12.2018   Bulletin 2018/49**

(73) Proprietor: **JFE Steel Corporation**
**Tokyo 100-0011 (JP)**

(72) Inventors:
• **YOSHITOMI Hiromi**
**Tokyo 100-0011 (JP)**
• **HIRASHIMA Takuya**
**Tokyo 100-0011 (JP)**
• **MASUOKA Hiroyuki**
**Tokyo 100-0011 (JP)**
• **TSUDA Seisuke**
**Tokyo 100-0011 (JP)**
• **KOBA Masaki**
**Tokyo 100-0011 (JP)**
• **NISHIMURA Yasuhiro**
**Tokyo 100-0011 (JP)**
• **NAKAGAITO Tatsuya**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
EP-A1- 2 415 896    EP-A1- 2 623 629
EP-A1- 2 762 590    EP-A1- 2 881 481
WO-A1-2013/146606    WO-A1-2015/092987
WO-A1-2015/093043    WO-A1-2016/002141
JP-A- 2007 211 279    JP-A- 2010 065 314
JP-A- 2011 117 041    JP-A- 2013 147 736

**Description**

Technical Field

The present invention relates to a high-yield-ratio high-strength galvanized steel sheet including a Mn-containing high-strength steel sheet as a base material and having high yield strength, good coating appearance, good corrosion resistance after forming, and good exfoliation resistance during severe forming, and to a method for producing the high-yield-ratio high-strength galvanized steel sheet.

Background Art

In recent years, surface-treated steel sheets obtained by imparting rusting resistance to base steel sheets, in particular, hot-dip galvanized steel sheets and galvannealed steel sheets, have been widely used in fields such as automobiles, household appliances, and construction materials. From the viewpoint of improving the fuel economy and the crashworthiness of automobiles, there has been a growing demand for lighter, higher-strength automobile bodies obtained by the use of higher-strength automobile body materials having a smaller thickness. This accelerates the use of high-strength steel sheets for automobiles. In particular, a high-strength steel sheet having a high yield ratio (YR: YR = YS/TS × 100(%), YS: yield strength, TS: tensile strength) is required.

A galvanized steel sheet is commonly produced as follows: A thin steel sheet obtained by subjecting a slab to hot rolling and cold rolling is used as a base material. The base material is subjected to annealing in an annealing furnace of a continuous hot-dip galvanizing line (hereinafter, referred to as a "CGL") and hot-dip galvanizing treatment. In the case of the production of a galvannealed steel sheet, alloying treatment is performed after the hot-dip galvanizing treatment.

Examples of the types of heating furnaces used as the annealing furnace of the CGL include a direct-fired-furnace type (DFF type), a non-oxidation-furnace type (NOF type), and an all-radiant-tube type (ART type). In recent years, the construction of a CGL equipped with an all-radiant-tube-type heating furnace has been increased because of, for example, an easy operation and because a low-cost high-quality coated steel sheet can be produced owing to the fact that pickup marks are less likely to be formed. However, unlike the direct-fired-furnace type (DFF type) or non-oxidation-furnace type (NOF type), since in the all radiant tube type heating furnace, there is no oxidation step immediately before annealing, a steel sheet containing an easily oxidizable element such as Mn is disadvantageous in coatability.

As a method for producing a galvanized steel sheet including a high-strength steel sheet that contains a large amount of Mn and that serves as a base material, Patent Literatures 1 and 2 each disclose a technique in which a heating temperature in a reducing furnace is specified by an expression using water vapor partial pressure and in which surface layers of base steel are subjected to internal oxidation by increasing a dew point.

Patent Literature 3 discloses a technique in which the concentration of $CO_2$ as well as $H_2O$ and $O_2$, which are oxidizing gases, is specified and surface layers of base steel immediately before coating are subjected to internal oxidation to inhibit external oxidation, improving coating appearance.

Patent Literature 4 discloses a technique in which by setting the dew point of an atmosphere in an annealing furnace to -45°C or lower in the temperature ranges of 820°C to 1,000°C in a soaking process and 750°C or higher in a cooling process in annealing, oxygen potential in the atmosphere is lowered to reduce a segregated oxide on surfaces without causing internal oxidation, thereby improving coating appearance.

WO 2015/093043 A1 discloses a further high strength hot-dip galvanized steel sheet and a manufacturing method therefor.

Citation List

Patent Literature

PTL 1: Japanese Unexamined Patent Application Publication No. 2004-323970
PTL 2: Japanese Unexamined Patent Application Publication No. 2004-315960
PTL 3: Japanese Unexamined Patent Application Publication No. 2006-233333
PTL 4: Japanese Unexamined Patent Application Publication No. 2010-255106

Summary of Invention

Technical Problem

The techniques described in Patent Literatures 1 and 2 are based on the assumption that a zone in which the dew point is controlled is the whole interior of the furnace; thus, it is difficult to control the dew point and to stably perform an operation. If a galvannealed steel sheet is produced while the dew point is unstably controlled, variations in the distribution of internal oxides formed in a base steel sheet may occur to cause defects such as variations in coating wettability and nonuniform alloying in the longitudinal and width directions of the steel sheet.

In the technique described in Patent Literature 3, similarly to Patent Literatures 1 and 2, the presence of internal oxides easily causes cracking during forming to degrade exfoliation resistance. The corrosion resistance is also degraded. Furthermore, $CO_2$ may cause problems such as furnace contamination and the carburization of the surfaces of the steel sheet to change mechanical properties.

The technique described in Patent Literature 4 has problems that it is very difficult to control water in the annealing furnace atmosphere to stably maintain the dew point of an atmosphere in the soaking process at -45°C or lower and that huge facility costs and operating costs are required.

Recently, high-strength galvanized steel sheets and high-strength galvannealed steel sheets have been increasingly used for portions to be severely formed. Thus, importance is placed on exfoliation resistance during severe forming. Specifically, the inhibition of the peeling of the coating in a formed portion is required when a coated steel sheet is subjected to bending at an angle of more than 90° and bent at a more acute angle or when a coated steel sheet is formed by impact.

To provide a high-strength high-yield-ratio steel sheet having good exfoliation resistance properties during severe forming, performing high-temperature annealing alone is not enough because a desired steel sheet metallographic structure is obtained by an addition of a large amount of Mn to steel. In the conventional art, a galvanized steel sheet having high yield strength and good corrosion resistance after forming cannot be produced by the use of a Mn-containing high-strength steel sheet serving as a base material using a CGL equipped with an all-radiant-tube-type heating furnace serving as an annealing furnace.

The present invention has been accomplished in light of the foregoing circumstances and aims to provide a high-yield-ratio high-strength galvanized steel sheet that includes a Mn-containing steel sheet serving as a base material and that has high yield strength, good coating appearance, good corrosion resistance, and good exfoliation resistance during severe forming, and to a production method therefor.

Solution to Problem

To achieve good coating appearance free from a bare spot, conventionally, the interior of a steel sheet is intentionally oxidized. However, the corrosion resistance and formability are deteriorated by the internal oxidation.

Specifically, until now, there have not been many attempts to perform the hot-dip galvanizing of a Mn-containing high-strength steel sheet after annealing in an atmosphere at a heating temperature equal to or higher than an Ac3 point in a soaking process in view of the degradation of appearance. The reason for this is that persons skilled in the art have common knowledge that the surface concentration of Mn increases with increasing heating temperature to degrade coating appearance and thus to form bare spots in an industrially easily operable annealing furnace atmosphere having a dew point of -40°C or higher and -20°C or lower and a hydrogen concentration of 5% or more by volume. Accordingly, there has been almost no attempt to subject a Mn-containing steel sheet to zinc coating after annealing at a temperature equal to or higher than the Ac3 point in an environment having a dew point of -40°C or higher and -20°C or lower and a hydrogen concentration of 5% or more by volume.

However, the inventors have dared to study a heating temperature region equal to or higher than the Ac3 point and have accomplished the present invention.

Specifically, the inventors have investigated a new unconventional method to solve the foregoing problems and have found that a high-yield-ratio high-strength galvanized steel sheet having high yield strength, good coating appearance, good corrosion resistance, and good exfoliation resistance is produced by appropriately controlling the dew point of an atmosphere and a heating temperature in an annealing step to form a specific metallographic structure and by adjusting the Mn content of a coated layer to a specific range. This is presumably because the occurrence of internal oxidation and surface concentration can be inhibited in surface layer portions of the steel sheet directly below the coated layer. More specifically, the inventors have found that a specific metallographic structure is obtained by performing heat treatment including a soaking process in which the temperature range of a heating temperature T is Ac3 point or higher and 950°C or lower, the hydrogen concentration is 5% or more by volume in the temperature range, and the dew point D in a furnace in the temperature range satisfies expression (1) described below, and that the Mn content of the coated layer is adjusted to a specific range to inhibit the selective surface oxidation reaction (hereinafter, referred to as "surface concentration") of an oxidizable element such as Mn on surfaces of the steel sheet,

$$-40 \leq D \leq (T - 1137.5)/7.5 \qquad (1)$$

Although a mechanism of the inhibition of the surface concentration of Mn in a high-temperature region equal to or higher than the Ac3 point is not clear at this time, a possible mechanism is described below.

From the Mn/MnO equilibrium diagram, since Mn approaches from an oxidation region to a reduction region in high temperatures equal to or higher than the Ac3 point, substantially no surface concentration of Mn seems to occur. It is conceivable that, by using specific production conditions to form a specific metallographic structure and by adjusting the Mn content of a coated layer to a specific range, the surface concentration of Mn may be inhibited without causing internal oxidation in surface portions of a steel sheet, and a high-yield-ratio high-strength galvanized steel sheet having, for example, high yield-strength and good corrosion resistance after forming may be provided. Mn concentration on surfaces during annealing in a furnace is taken in the coated layer when a steel sheet reacts with a coating bath in a coating process; thus, the amount of Mn concentration on the surfaces can be estimated from the Mn content in the coating.

It has been revealed that appropriate control of the Mn content of the coated layer and the area percentages and grain sizes in the metallographic structure by adjustment of a composition and production conditions is important to solve the foregoing problems.

The present invention is based on the aforementioned findings and is specified as listed below.

[1] A high-yield-ratio high-strength galvanized steel sheet according to claim 1.
[2] A method for producing a high-yield-ratio high-strength galvanized steel sheet according to claim 2.
[3] A preferred embodiment is set out in dependent method claim 3.

Advantageous Effects of Invention

According to the present invention, the high-yield-ratio high-strength galvanized steel sheet having high yield strength, good coating appearance, good corrosion resistance, and good exfoliation resistance during severe forming is provided.

The use of the high-yield-ratio high-strength galvanized steel sheet according to the present invention for frameworks of automobile bodies can greatly contribute to an improvement in crashworthiness and a reduction in weight.

Brief Description of Drawings

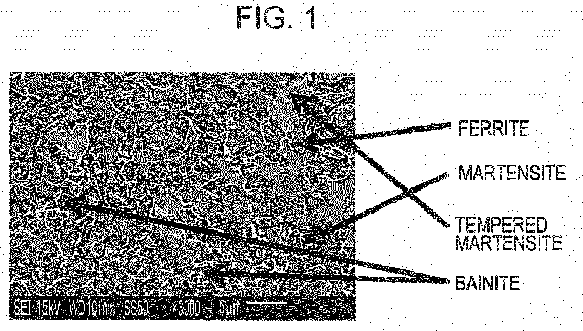

[Fig. 1] Fig. 1 illustrates an example of an image obtained by microstructural observation.

Description of Embodiments

Embodiments of the present invention will be described below. The present invention is not limited to these embodiments described below.

<High-Yield-Ratio High-Strength Galvanized Steel Sheet>

A high-yield-ratio high-strength galvanized steel sheet has a composition containing, on a percent by mass basis, C: 0.12% or more and 0.25% or less, Si: less than 1.0%, Mn: 2.0% or more and 3% or less, P: 0.05% or less, S: 0.005% or less, Al: 0.1% or less, N: 0.008% or less, Ca: 0.0003% or less, and 0.01% to 0.1% in total of one or more of Ti, Nb, V, and Zr, the balance being Fe and unavoidable impurities.

The composition may further contain, on a percent by mass basis, 0.1% to 0.5% in total of one or more of Mo, Cr, Cu, and Ni, and/or B: 0.0003% to 0.005%.

The composition may further contain, on a percent by mass basis, Sb: 0.001% to 0.05%.

Each of the components will be described below. In the following description, the symbol "%" that expresses the content of a component refers to "% by mass".

C: 0.12% or more and 0.25% or less

C is an element effective in strengthening the steel sheet and contributes to an increase in strength by the formation of martensite supersaturated with C. Furthermore, C contributes to the increase in strength by the formation of fine alloy compounds or alloy carbonitrides with carbide-forming elements such as Nb, Ti, V, and Zr. To provide these effects, the C content needs to be 0.12% or more. A C content of more than 0.25% results in the degradation of spot weldability of the steel sheet. The increase of martensite tends to increase the hardness of the steel sheet and decrease YR and bending workability. Accordingly, the C content is 0.12% or more and 0.25% or less. In view of properties, the C content is preferably 0.23% or less. The lower limit is preferably in the range of 0.13% or more.

Si: less than 1.0%

Si is an element that contributes to strengthening mainly by solid-solution hardening. Since a relatively small decrease in ductility is observed with respect to an increase in strength, Si contributes to an improvement not only in strength but also a balance between strength and ductility. Meanwhile, Si is liable to form a Si-based oxide on surfaces of the steel sheet and thus can cause the formation of bare spots. Accordingly, Si may be added only in an amount required for enhancing strength. In view of coatability, the upper limit of the Si content is less than 1.0%, preferably 0.8% or less. The Si content is preferably 0.01% or more, more preferably 0.05% or more.

Mn: 2.0% or more and 3% or less

Mn is an element that contributes to strengthening by solid-solution hardening and the formation of martensite. To provide this effect, the Mn content needs to be 2.0% or more, preferably 2.1% or more, more preferably 2.2% or more. Meanwhile, a Mn content of more than 3% leads to spot weld cracking and is liable to cause variations of the metallographic structure due to, for example, the segregation of Mn, thereby degrading workability. Mn is also liable to concentrate on surfaces of the steel sheet as an oxide or composite oxide to possibly cause the formation of bare spots. Accordingly, the Mn content is 3% or less, preferably 2.8% or less, more preferably 2.7% or less.

P: 0.05% or less

P is an element that contributes to the strengthening of the steel sheet by solid-solution hardening. However, a P content of more than 0.05% results in the degradation of workability such as weldability and stretch-flangeability. Thus, the P content is desirably 0.03% or less. Although the lower limit of the P content is not particularly specified, the P content is preferably 0.001% or more because a P content of less than 0.001% leads to a decrease in production efficiency in the production process and an increase in phosphorus removal cost. At a P content of 0.001% or more, the effect of increasing strength is provided.

S: 0.005% or less

S is a harmful element that causes hot shortness and that is present in the form of sulfide inclusions in steel to degrade the workability such as bendability of the steel sheet. Thus, the S content is preferably minimized as much as possible. In the present invention, a S content of up to 0.005% can be allowable. Preferably, the S content is 0.002% or less. Although the lower limit is not particularly specified, a S content of less than 0.0001% leads to a decrease in production efficiency in the production process and an increase in cost. Accordingly, the S content is preferably 0.0001% or more.

Al: 0.1% or less

Al is added as a deoxidizer. When the effect needs to be provided, the Al content is preferably 0.01% or more, more preferably 0.02% or more. At an Al content of more than 0.1%, the material cost is increased, and excess Al causes an induction of surface defects of the steel sheet. Accordingly, the Al content is 0.1% or less, preferably 0.08% or less.

N: 0.008% or less

A N content of more than 0.008% results in the formation of an excess of a nitride in steel, thereby possibly decreasing ductility and toughness and degrading the surface properties of the steel sheet. Accordingly, the N content is 0.008% or less, preferably 0.006% or less. From the viewpoint of improving ductility owing to higher cleanliness of ferrite, the N content is minimized as much as possible. However, an excessive reduction in N content leads to a decrease in production efficiency in the production process and an increase in cost. Accordingly, the N content is preferably 0.0001% or more.

Ca: 0.0003% or less

Ca forms a sulfide and an oxide in steel to decrease the workability of the steel sheet. Accordingly, the Ca content is 0.0003% or less, preferably 0.0001% or less. A lower Ca content is more preferred and may be 0%.

One or more of Ti, Nb, V, and Zr: 0.01% to 0.1% in total

Ti, Nb, V, and Zr form precipitates by forming carbides and nitrides (sometimes carbonitrides) with C and N. Fine precipitates contribute to the strengthening of the steel sheet. These elements have the effect of refining the metallographic structure of a hot-rolled coil and also refine the metallographic structure after the subsequent cold rolling and annealing to contribute to an increase in strength and an improvement in workability such as bendability. Accordingly, the total content of these elements is 0.01% or more, preferably 0.02% or more. However, the excessive addition thereof increases deformation resistance in the cold rolling to hinder productivity. Furthermore, the presence of excessive or coarse precipitates decreases ductility of ferrite to decrease the workability, such as ductility, bendability, and/or stretch-flangeability of the steel sheet. Accordingly, the total content of these elements is 0.1% or less, preferably 0.08% or less.
The balance other than the elements described above is composed of Fe and unavoidable impurities. The composition of the steel sheet may contain components described below.

One or more of Mo, Cr, Cu, and Ni: 0.1% to 0.5% in total, and/or B: 0.0003% to 0.005%

These elements enhance hardenability to facilitate the formation of martensite and thus contribute to strengthening. In order to provide these effects, the total content of one or more of Mo, Cr, Cu, and Ni is preferably 0.1% or more. The excessive addition of Mo, Cr, Cu, and Ni leads to a saturation of the effects and an increase in cost. Furthermore, Cu induces cracking in the hot rolling to cause surface flaws. Thus, the total content is 0.5% or less. Ni has the effect of inhibiting the occurrence of surface flaws due to the addition of Cu. Thus, when Cu is added, Ni is desirably added together with Cu. The Ni content is preferably 1/2 or more of the Cu content. As described above, B also enhances hardenability to contribute to strengthening. The lower limit of the B content is specified from the viewpoint of providing the effect of inhibiting the formation of ferrite in the course of cooling in annealing and the viewpoint of improving hardenability. Specifically, the lower limit thereof is preferably 0.0003% or more, more preferably 0.0005% or more. Regarding the excessive addition thereof, the upper limit is specified because of the saturation of the effect. Specifically, the upper limit is preferably 0.005% or less, more preferably 0.002% or less. Excessive hardenability disadvantageously causes weld cracking during welding.

Sb: 0.001% to 0.05%

Sb is an element effective in inhibiting, for example, decarbonization, denitrization, and deboronization to inhibit a decrease in the strength of the steel sheet. Furthermore, Sb is effective in inhibiting spot weld cracking. Thus, the Sb content is 0.001% or more, more preferably 0.002% or more. However, the excessive addition of Sb deteriorates workability such as stretch-flangeability of the steel sheet. Thus, the Sb content is preferably 0.05% or less, more preferably 0.02% or less.
When the optional components described above are contained in amounts of less than the lower limits, the effects of the present invention are not impaired. Thus, the incorporation of the optional components in amounts of less than the lower limits is considered to be regarded as the incorporation of the optional components serving as unavoidable impurities.
The metallographic structure of the high-yield-ratio high-strength galvanized steel sheet will be described below.
The metallographic structure of the high-yield-ratio high-strength galvanized steel sheet has, by area percentage, 20% or less ferrite, 40% or more in total of bainite and tempered martensite, and 60% or less as-quenched martensite. The bainite has an average grain size of 6.0 $\mu$m or less.

Ferrite: 20% or less

Although the presence of ferrite is not preferred in view of the strength of the steel sheet, a ferrite content of up to 20% is allowable in the present invention. The ferrite content is preferably 15% or less. The ferrite content may be 0%. As the area percentage, a value measured by a method described in an example is used. Here, carbide-free bainite formed at a relatively high temperature is not distinguished from ferrite by observation with a scanning electron microscope described in an example and is regarded as ferrite.

Bainite and Tempered Martensite: 40% or more in total

In order to achieve both high tensile strength and a high yield ratio, the total area percentage of bainite (this bainite refers to carbide-containing bainite because the carbide-free bainite is regarded as ferrite as described above) and tempered martensite is 40% or more. In particular, in order to obtain high YS, this bainite and tempered martensite are important in the present invention. To obtain high YS, the total area percentage needs to be 40% or more, preferably 45% or more, more preferably 50% or more, even more preferably 55% or more. Although the upper limit thereof is not particularly limited, it is preferably 90% or less, more preferably 80% or less, even more preferably 70% or less, in view of the balance between strength and ductility. As the area percentage, a value measured by a method described in an example is used.

As-Quenched Martensite: 60% or less

As-quenched martensite is hard and effective in strengthening the steel sheet. To provide the effect of increasing TS, the area percentage of as-quenched martensite is preferably 20% or more, more preferably 25% or more, even more preferably 30% or more. As-quenched martensite, which is hard, decreases YR; thus, the upper limit thereof is 60% or less, preferably 50% or less, more preferably 40% or less, even more preferably 30% or less. As the area percentage, a value measured by a method described in an example is used.

Average Grain Size of Bainite: 6.0 $\mu$m or less

As described above, bainite and tempered martensite are important in the present invention in order to obtain high YS. It is important that the bainite have an average grain size of 6.0 $\mu$m or less in addition to the area percentage being in the range described above. The bainite preferably has an average grain size of 5 $\mu$m or less. Although the lower limit thereof is not particularly limited, it is preferable that the lower limit thereof is substantially 1.0 $\mu$m or more, more preferably 2.0 $\mu$m or more. As the average grain size, a value measured by a method described in an example is used.

Technical significance of the components of the metallographic structure is as described above. A high-yield-ratio high-strength galvanized steel sheet having high yield strength, good coating appearance, good corrosion resistance, and good exfoliation resistance is provided by a production method described below. The reason for this is presumably that in the production method described below, in the case where the Mn content of the coated layer is adjusted to a specific range and where the metallographic structure is adjusted to the foregoing metallographic structure, the formation of internal oxidation and surface concentration can be inhibited in surface layer portions of the steel sheet directly below the coated layer.

The foregoing metallographic structure may contain a component other than ferrite, bainite, tempered martensite, and/or as-quenched martensite. Examples of the other component include pearlite and retained austenite. The area percentage of the other component is preferably 10% or less.

The coated layer will be described below. The coated layer has a coating weight per side of 20 to 120 g/m$^2$. A coating weight of 20 g/m$^2$ or more is required to ensure corrosion resistance. The coating weight is preferably 30 g/m$^2$ or more. A coating weight of 120 g/m$^2$ or less is required to provide good exfoliation resistance. The coating weight is preferably 90 g/m$^2$ or less.

Mn Content of Coated layer: 0.05 g/m$^2$ or less

A Mn oxide formed in a heat-treatment process before coating is taken in the coated layer when a coating bath reacts with a material steel sheet to form a FeAl or FeZn alloy phase. In the case of an excessive amount of the oxide, the oxide is left at coating/base steel boundaries to degrade the adhesion of the coating. Thus, the lower limit of the amount of the Mn oxide formed in the heat-treatment process is not specified. A smaller amount thereof is more preferred. When the Mn content of the coated layer is more than 0.05 g/m$^2$, the reaction to form the FeAl or FeZn alloy phase is insufficient, leading to the formation of bare spots and a decrease in exfoliation resistance. Here, the amount of the Mn oxide formed in the heat-treatment process can be quantitatively determined from the Mn content of the coated layer after a coating step. The measurement thereof is performed by a method described in an example. Accordingly, by measuring "the Mn content of the coated layer", the presence or absence and the degree of the foregoing problem due to the Mn oxide can be evaluated.

The coated layer is preferably a zinc coated layer. The zinc coated layer may be a zinc alloy coated layer that has been subjected to alloying treatment.

<Method for Producing High-Yield-Ratio High-Strength Galvanized Steel Sheet>

A production method of the present invention includes a hot-rolling step, a cold-rolling step, an annealing step, a galvanizing step, and a skin-pass rolling step.

The hot-rolling step is a step of heating a steel having the composition described above to 1,100°C or higher and 1,350°C or lower, hot-rolling the steel at a finish rolling temperature of 800°C or higher and 950°C or lower, and coiling the resulting steel sheet at a temperature of 450°C or higher and 700°C or lower. In the following description, the temperature refers to the surface temperature of the steel sheet.

Production of Slab (Cast Slab (Steel))

The steel used in the production method of the present invention is one generally called as a slab produced by a continuous casting process. To prevent the macrosegregation of alloy components, the continuous casting process is employed. The steel may be produced by, for example, an ingot-making process or a thin slab casting process.

Any of the following processes may be employed: a conventional process in which a steel slab is produced, temporarily cooled to a room temperature, and reheated may be employed; a process in which a hot steel slab is transferred into a heating furnace without cooling down to about room temperature, and hot-rolled; a process in which a steel slab is slightly heated and immediately hot-rolled; and a process in which after casting, a steel slab is hot-rolled while maintained at a high temperature.

Conditions of the hot rolling are as follows: the steel having the composition described above is heated at a temperature of 1,100°C or higher and 1,350°C or lower, hot-rolled at a finish rolling temperature of 800°C or higher and 950°C or lower, and coiled at a temperature of 450°C or higher and 700°C or lower.

Heating Temperature of Slab

The heating temperature of the steel slab is in the range of 1,100°C or higher and 1,350°C or lower. The use of a heating temperature outside the range of the upper limit temperature easily coarsens precipitates present in the steel slab. This can be disadvantageous when strength is enhanced by precipitation hardening. Furthermore, when the heating temperature is outside the range of the upper limit temperature, coarse precipitates can act as nuclei to adversely affect the formation of a metallographic structure in the subsequent annealing step. In contrast, appropriate heating allows voids, defects, and so forth on surfaces of the slab to scale off to reduce cracks and irregularities on surfaces of the steel sheet, thereby beneficially providing smooth surfaces of the steel sheet. To provide the effect, the heating temperature needs to be 1,100°C or higher. A heating temperature of higher than 1,350°C can result in the coarsening of austenite grains and the coarsening of the metallographic structure of a final product to cause decreases in the strength and workability, such as bendability and stretch-flangeability, of the steel sheet.

Hot Rolling

The steel slab obtained as described above is subjected to hot rolling including rough rolling and finish rolling. In general, a steel slab is formed by rough rolling into a sheet bar, and the sheet bar is formed by finish rolling and coiling into a hot-rolled coil (hot-rolled steel sheet). Depending on the ability of a mill, it suffices to provide a hot-rolled steel sheet having a predetermined size without regard to such a division. The hot rolling needs to be performed under conditions described below.

Finish rolling temperature: 800°C or higher and 950°C or lower

The use of a finish rolling temperature of 800°C or higher enables the formation of a uniform metallographic structure of the hot-rolled coil. The uniform metallographic structure at this stage contributes to provide a final product having a uniform metallographic structure. A nonuniform metallographic structure decreases workability such as ductility, bendability, and stretch-flangeability. Meanwhile, a finish rolling temperature of higher than 950°C results in a large amount of oxide (scale) formed to roughen the boundary between the oxide and the base steel, thereby degrading surface quality after pickling and cold rolling. Furthermore, a finish rolling temperature of higher than 950°C can result in an increase in the grain size of the metallographic structure to cause a decrease in the strength and workability, such as bendability and stretch-flangeability, of the steel sheet, similarly to the steel slab.

After the hot rolling is completed, preferably, cooling is initiated in three seconds after the completion of the finish rolling, and the cooling is performed in a temperature range of [finish rolling temperature]°C to [finish rolling temperature - 100]°C at an average cooling rate of 10 to 250 °C/s, in order to refine and uniformize the metallographic structure.

Coiling Temperature: 450°C to 700°C

The coiling temperature, which is a temperature immediately before the coiling of the hot-rolled steel sheet, needs to be 450°C or higher in view of the fine precipitation of, for example, NbC. The coiling temperature needs to be 700°C or lower so as not to allow precipitates to coarsen excessively. The lower limit thereof is preferably 500°C or higher. The upper limit thereof is preferably 680°C or lower.

Subsequently, the cold-rolling step is performed. The cold-rolling step is a step of cold-rolling the hot-rolled sheet (hot-rolled steel sheet) obtained in the hot-rolling step. Usually, after the scales are removed by pickling, the cold rolling is performed to provide a cold-rolled coil. The pickling is performed on an as-needed basis.

The cold rolling is preferably performed at a rolling reduction of 20% or more in order to provide a uniform fine metallographic structure (metallographic structure) in the subsequent annealing. At a rolling reduction of less than 20%, if coarse grains are easily formed in the annealing, a nonuniform metallographic structure can be obtained, in some cases. As described above, the strength and workability of the final product sheet can be decreased. Although the upper limit of the rolling reduction is not particularly specified, because of the high-strength steel sheet, a high rolling reduction can decrease the productivity due to rolling load and can cause an odd shape. The rolling reduction is preferably 90% or less.

The cold-rolled steel sheet after the cold-rolling step is annealed (annealing step) under conditions that a heating temperature T is in the temperature range of an Ac3 point to 950°C, an annealing furnace atmosphere has a temperature in the temperature range and a hydrogen concentration H of 5% or more by volume, a dew point D in the annealing furnace having a temperature in the temperature range satisfies expression (1) described below, a heating time in the temperature range of the Ac3 point to 950°C is 60 seconds or less, and a retention time in the temperature range of 450°C to 550°C is five seconds or more.

Heating Temperature T: Ac3 point to 950°C

When the heating temperature (annealing temperature) is lower than the Ac3 point or higher than 950°C, a predetermined metallographic structure is not obtained, failing to provide high yield strength. Ac3 = 937 - 477C + 56Si - 20Mn - 16Cu - 27Ni - 5Cr + 38Mo + 125V + 136Ti + 35Zr - 19Nb + 198Al + 3315B. In this expression, the element symbols refer to the contents of the elements. The content of a composition that is not contained is defined as zero.

Hydrogen concentration H in Temperature Range of Ac3 to 950°C: 5% or more by volume

When the volume percentage of hydrogen gas in an atmosphere is less than 5% by volume, an activation effect by reduction is not obtained, and result in degrading coating appearance. Although the upper limit thereof is not particularly specified, a volume percentage of the hydrogen gas of more than 20% by volume leads to the saturation of the effect of improving the coating appearance and an increase in cost. Accordingly, the volume percentage of hydrogen gas is preferably 5% or more by volume and 20% or less by volume. Gas components in the furnace are composed of nitrogen gas and incidental impurity gases other than the hydrogen gas. Any gas component may be contained as long as the effect of the present invention is not impaired. The hot-dip galvanizing treatment can be performed in the usual manner. Outside the temperature range, the hydrogen concentration need not be in the range of 5% or more by volume.

Dew point D in Temperature Range of Ac3 to 950°C: range given by expression (1)

To achieve good coating appearance, good corrosion resistance, and exfoliation resistance during severe forming while the foregoing heating-temperature range is used, the dew point needs to be appropriately controlled to the range given by expression (1). Annealing in an atmosphere having a dew point that does not satisfy expression (1) causes the formation of bare spots, resulting in degraded coating appearance. Specifically, at a dew point D of more than the upper limit, an alloying element such as Si is easily picked up in operation in the present invention. Although the lower limit of the dew point is not particularly specified, a difficulty lies in controlling the dew point to lower than -40°C; thus, huge facility costs and operating costs are disadvantageously required.

$$-40 \leq D \leq (T - 1137.5)/7.5 \qquad (1)$$

where in expression (1), D represents the dew point (°C) in the furnace, and T represents the heating temperature (°C).

Heating Time in Temperature Range of Ac3 point to 950°C: 60 seconds or less

The heating time in the temperature range of the Ac3 point to 950°C is controlled to 60 seconds or less. A heating time of more than 60 seconds results in the surface concentration of the oxides or composite oxides of Si and Mn formed on the surfaces of the steel sheet to cause poor appearance. The heating time is preferably 20 seconds or less. The heating time in this temperature range is preferably three seconds or more from the viewpoint of stabilizing the material (uniformizing the metallographic structure (metallographic structure)).

Retention time in temperature range of 450°C to 550°C: five seconds or more

The use of a retention time of five seconds or more in the temperature range of 450°C to 550°C before the coating step stably provides the metallographic structure, in particular, bainite, and stabilizes the temperature of the sheet before immersion in the coating bath. To achieve a desired metallographic structure and good coating quality, the use of a retention time of five seconds or more in the predetermined temperature range provides high YS and stabilizes the temperature of the sheet before immersion in the coating bath. If the temperature is lower than 450°C, because the temperature for the retention time is usually equal to a cooling stop temperature, coating is performed at a temperature of lower than 450°C, thereby degrading the quality of the coating bath in the galvanizing step. Accordingly, the lower limit of the temperature range is 450°C. If the temperature of the sheet before immersion in the bath is higher than 550°C, the temperature of the coating bath is increased to easily cause the formation of dross. The dross adheres to the surfaces to cause poor appearance. Accordingly, the upper limit of the temperature range is 550°C. Cooling from the heating temperature to this temperature range is preferably performed at a cooling rate (average cooling rate) of 3 °C/s or more from the viewpoint of achieving desired properties. The upper limit is not particularly specified. The cooling stop temperature may be 450°C to 550°C as described above. The steel sheet may be temporarily cooled to a temperature equal to or lower than the cooling stop temperature, reheated, and retained in the temperature range of 450°C to 550°C.

To soften the coil and so forth, a heating step may be performed before the annealing described above.

Next, the galvanizing step is performed. The galvanizing step is a step of subjecting the annealed sheet obtained by annealing to coating treatment and cooling the resulting sheet to 50°C or lower at an average cooling rate of 5 °C/s or more.

The coating treatment may be performed at a coating weight per side of 20 to 120 $g/m^2$. The coating weight needs to be 20 $g/m^2$ or more in order to enhance corrosion resistance and needs to be 120 $g/m^2$ or less in order to achieve good exfoliation resistance.

Other conditions of the coating treatment are not particularly limited. For example, this step is a step of forming a coated layer on surfaces of the annealed sheet obtained by the foregoing method, the coated layer containing, on a percent by mass basis, Fe: 0.1% to 18.0%, Al: 0.001% to 1.0%, and 0% to 30% in total of one or two or more selected from Pb, Sb, Si, Sn, Mg, Mn, Ni, Cr, Co, Ca, Cu, Li, Ti, Be, Bi, and REM, the balance being Zn and unavoidable impurities. A method of the coating treatment is galvanizing. Conditions thereof may be appropriately set. After the galvanizing, alloying treatment may be performed by heating. For example, the alloying treatment is a treatment in which the galvanized sheet is held in a temperature range of 450°C to 600°C for about 1 to about 60 seconds. In the case of performing the alloying treatment, the coated layer preferably has a Fe content of 7.0% to 15.0% by mass. A Fe content of less than 7% by mass can lead to the occurrence of nonuniform alloying and the degradation of flaking properties. Meanwhile, a Fe content of more than 15% by mass can lead to the degradation of the exfoliation resistance.

After the coating treatment (or after the alloying treatment when the alloying treatment is performed), the resulting steel sheet is cooled to 50°C or lower at an average cooling rate of 5 °C/s or more in order to provide martensite, which is essential for strengthening. An average cooling rate of less than 5 °C/s makes it difficult to form martensite required for strength. If cooling is terminated at a temperature higher than 50°C, martensite is excessively self-tempered into tempered martensite, making it difficult to obtain strength required. The average cooling rate is preferably 30 °C/s or less in order to form appropriately tempered martensite for the purpose of providing a high YR.

Subsequently, the skin-pass rolling step is performed. The skin-pass rolling step is a step of subjecting the coated sheet after the galvanizing step to skin-pass rolling at an elongation percentage of 0.1% or more. The coated sheet is subjected to skin-pass rolling at an elongation percentage of 0.1% or more in order to stably provide high YS in addition to shape correction and the adjustment of the surface roughness. Regarding the shape correction and the adjustment of the surface roughness, a levelling process may be performed in place of the skin-pass rolling. Excessive skin-pass rolling imparts excessive strain to the surfaces of the steel sheet to decrease the evaluation values of bendability and stretch-flangeability. Furthermore, excessive skin-pass rolling decreases ductility and imposes a high load on the facility because of the high-strength steel sheet. Accordingly, the rolling reduction in the skin-pass rolling is preferably 3% or less.

EXAMPLES

Molten steels having compositions given in Table 1 were made in a converter and formed into slabs with a continuous casting apparatus. Subsequently, the slabs were subjected to hot rolling, cold rolling, annealing, coating treatment, and skin-pass rolling (SKP) under various conditions given in Table 2 to produce high-yield-ratio high-strength galvanized steel sheets (product sheets). In the annealing, cold-rolled steel sheets were charged into a CGL equipped with an all-radiant-tube-type heating furnace serving as an annealing furnace. Table 2 lists specific conditions. Gas components in an atmosphere are composed of nitrogen gas, hydrogen gas, and incidental impurity gases. The dew point was controlled by absorbing and removing water in the atmosphere. Table 2 lists the hydrogen concentration. GA indicates that a Zn bath containing 0.14% by mass Al was used. GI indicates that a Zn bath containing 0.18% by mass Al was used. The coating weight was adjusted by gas wiping. GA indicates that alloying treatment was performed. In cooling (cooling after the coating treatment), the steel sheets were cooled to 50°C or lower by being passed through a water tank having a water temperature of 40°C.

[Table 1]

| Steel No. | Composition % by mass | | | | | | | | | | | | | | | | | | Ac3 °C | Remarks |
|---|---|---|---|---|---|---|---|---|---|---|---|---|---|---|---|---|---|---|---|---|
| | C | Si | Mn | P | S | N | Al | Ti | Nb | V | Zr | B | Mo | Cr | Cu | Ni | Sb | Ca | | |
| A | 0.120 | 0.20 | 2.80 | 0.031 | 0.0010 | 0.0040 | 0.035 | 0.015 | 0.042 | | | | | | | | | 0.0001 | 843 | Example |
| B | 0.140 | 0.10 | 2.45 | 0.008 | 0.0008 | 0.0038 | 0.030 | 0.022 | 0.020 | | | 0.0010 | 0.10 | | | | | | 842 | Example |
| C | 0.160 | 0.06 | 2.30 | 0.010 | 0.0009 | 0.0039 | 0.035 | 0.025 | 0.020 | | | | 0.12 | | | | | 0.0001 | 833 | Example |
| D | 0.180 | 0.02 | 2.22 | 0.010 | 0.0009 | 0.0056 | 0.035 | 0.025 | 0.020 | | | | 0.12 | | | | | 0.0001 | 822 | Example |
| E | 0.230 | 0.60 | 2.05 | 0.001 | 0.0015 | 0.0040 | 0.035 | | 0.025 | | | 0.0010 | | | | | | | 830 | Example |
| F | 0.160 | 0.10 | 1.85 | 0.010 | 0.0010 | 0.0040 | 0.030 | 0.018 | 0.023 | | | 0.0010 | 0.10 | 0.1 | | | | 0.0001 | 844 | Comparative example |
| G | 0.160 | 1.20 | 2.30 | 0.010 | 0.0009 | 0.0039 | 0.030 | 0.025 | 0.020 | | | | 0.12 | | | | | | 895 | Comparative example |
| H | 0.160 | 0.08 | 2.30 | 0.010 | 0.0009 | 0.0040 | 0.035 | | | | | | 0.10 | | | | | 0.0001 | 830 | Comparative example |
| I | 0.190 | 0.50 | 2.05 | 0.001 | 0.0015 | 0.0040 | 0.035 | 0.031 | | | | 0.0010 | | | | | | | 848 | Example |
| J | 0.190 | 0.50 | 2.05 | 0.001 | 0.0015 | 0.0040 | 0.035 | | | 0.051 | | | | | | | | | 847 | Example |
| K | 0.190 | 0.50 | 2.05 | 0.001 | 0.0015 | 0.0040 | 0.035 | | | | 0.028 | | | | | | | | 841 | Example |
| L | 0.160 | 0.06 | 2.30 | 0.010 | 0.0009 | 0.0039 | 0.035 | 0.025 | 0.020 | | | | | 0.18 | | | | | 827 | Example |
| M | 0.160 | 0.06 | 2.30 | 0.010 | 0.0009 | 0.0039 | 0.035 | 0.025 | 0.020 | | | | | | 0.10 | 0.05 | | | 825 | Example |
| N | 0.160 | 0.06 | 2.30 | 0.010 | 0.0009 | 0.0039 | 0.035 | 0.025 | 0.020 | | | | | | | | 0.004 | | 828 | Example |

* Values outside the range of the present invention are underlined.

[Table 2]

| No. | Steel No. | Hot rolling | | | Cold rolling | Annealing | | | | | After coating | | | SKP | Remarks |
|---|---|---|---|---|---|---|---|---|---|---|---|---|---|---|---|
| | | Slab heating temperature (°C) | Finish rolling temperature (°C) | Coiling temperature (°C) | Cold-rolling reduction (%) | Temperature T (°C) | Hydrogen concentration (vol.%) | Dew point D (°C) | Heating time (s) | Retention time*2 (s) | Average cooling rate (°C/s)*1 | Type | Coating weight (g/m²) | Elongation percentage (%) | |
| 1 | A | 1280 | 920 | 520 | 60 | 870 | 6 | -37 | 15 | 7 | 8 | GA | 60 | 0.15 | Example |
| 2 | B | 1150 | 840 | 580 | 50 | 870 | 12 | -39 | 15 | 12 | 10 | GI | 46 | 0.2 | Example |
| 3 | C | 1200 | 880 | 550 | 50 | 850 | 8 | -40 | 17 | 15 | 10 | GI | 45 | 0.3 | Example |
| 4 | D | 1230 | 900 | 600 | 40 | 860 | 10 | -38 | 15 | 15 | 20 | GI | 47 | 0.3 | Example |
| 5 | E | 1250 | 860 | 620 | 30 | 860 | 15 | -38 | 15 | 10 | 10 | GI | 48 | 0.3 | Example |
| 6 | F | 1200 | 880 | 560 | 50 | 850 | 8 | -39 | 15 | 15 | 10 | GI | 45 | 0.3 | Comparative example |
| 7 | G | 1220 | 890 | 560 | 50 | 910 | 8 | -39 | 15 | 15 | 10 | GI | 40 | 0.3 | Comparative example |
| 8 | H | 1180 | 890 | 560 | 50 | 850 | 8 | -39 | 15 | 15 | 10 | GI | 46 | 0.3 | Comparative example |
| 9 | C | 1200 | 880 | 550 | 50 | 865 | 8 | -37 | 13 | 15 | 10 | GA | 48 | 0.3 | Example |
| 10 | C | 1200 | 880 | 550 | 50 | 850 | 3 | -39 | 13 | 15 | 10 | GI | 15 | 0.3 | Comparative example |
| 11 | C | 1200 | 880 | 550 | 50 | 850 | 8 | -25 | 15 | 15 | 10 | GI | 25 | 0.3 | Comparative example |
| 12 | C | 1200 | 880 | 550 | 50 | 850 | 8 | -39 | 70 | 15 | 10 | GI | 15 | 0.3 | Comparative example |
| 13 | C | 1200 | 880 | 550 | 50 | 850 | 8 | -40 | 15 | 1 | 10 | GI | 45 | 0.3 | Comparative example |
| 14 | C | 1200 | 880 | 550 | 50 | 850 | 8 | -40 | 5 | 5 | 25 | GI | 45 | 0.3 | Example |
| 15 | C | 1200 | 880 | 550 | 50 | 760 | 8 | *3 | 15 | 15 | 10 | GI | 45 | 0.3 | Comparative example |
| 16 | C | 1200 | 880 | 550 | 50 | 910 | 8 | -40 | 55 | 15 | 10 | GI | 20 | 0.3 | Example |

| No. | Steel No. | Hot rolling | | | Cold rolling | Annealing | | | | | After coating | | | SKP | Remarks |
|---|---|---|---|---|---|---|---|---|---|---|---|---|---|---|---|
| | | Slab heating temperature (°C) | Finish rolling temperature (°C) | Coiling temperature (°C) | Cold-rolling reduction (%) | Temperature T (°C) | Hydrogen concentration (vol.%) | Dew point D (°C) | Heating time (s) | Retention time*2 (s) | Average cooling rate (°C/s)*1 | Type | Coating weight (g/m²) | Elongation percentage (%) | |
| 17 | C | 1200 | 880 | 550 | 50 | 850 | 8 | -40 | 17 | 15 | 150 | GI | 45 | 0.3 | Example |
| 18 | E | 1200 | 860 | 600 | 50 | 860 | 15 | -38 | 15 | 10 | <u>1</u> | GI | 48 | 0.3 | Comparative example |
| 19 | I | 1300 | 830 | 600 | 50 | 860 | 15 | -38 | 15 | 10 | 10 | GI | 48 | 0.3 | Example |
| 20 | J | 1200 | 900 | 600 | 50 | 860 | 15 | -38 | 15 | 10 | 10 | GI | 48 | 0.3 | Example |
| 21 | K | 1260 | 850 | 600 | 50 | 860 | 15 | -38 | 15 | 10 | 10 | GI | 48 | 0.45 | Example |
| 22 | L | 1200 | 880 | 550 | 50 | 850 | 8 | -40 | 17 | 15 | 10 | GI | 45 | 0.3 | Example |
| 23 | M | 1200 | 880 | 550 | 50 | 850 | 8 | -40 | 17 | 15 | 10 | GI | 45 | 0.3 | Example |
| 24 | L | 1200 | 880 | 550 | 50 | 850 | 8 | -40 | 17 | 15 | 10 | GI | 45 | 0.3 | Example |

* Values outside the range of the present invention are underlined.
*1 Regarding the average cooling rate after coating, the temperature range was from 450°C or lower to 50°C after a steel sheet was passed through a final cooling zone, and the steel sheet was passed through a water tank having a water temperature of 40°C in the last cooling stage so as to adjust the temperature to 50°C or lower.
*2 This indicates a retention time in the temperature range of 450°C to 550°C.
*3 This indicates that the dew point is outside the range.

EP 3 409 807 B1

Samples of the galvanized steel sheets produced as described above were taken and subjected to a tensile test by a method described below to measure and calculate the yield strength (YS), the tensile strength (TS), and the yield ratios (YR = YS/TS × 100%). The coatability (surface properties) was evaluated by visual observation of appearance. The corrosion resistance after forming and the exfoliation resistance during forming were evaluated. Evaluation methods are described below.

Tensile Test

A JIS No. 5 test piece for a tensile test (JIS Z 2201) was taken from each of the galvanized steel sheets in a direction perpendicular to a rolling direction. A tensile test was performed at a constant cross-head speed of 10 mm/min. The yield strength (YS) was defined as a value obtained by reading 0.2% proof stress from a slope for an elastic region at a stress of 100 to 200 MPa. The tensile strength was defined as a value obtained by dividing a maximum load by the initial cross-sectional area of the parallel portion of the test piece in the tensile test. Regarding the thickness used for the calculation of the cross-sectional area of the parallel portion, a thickness value including the thickness of the coating was used.

Surface Properties (Appearance)

The appearance after coating was visually observed. A sample in which no bare-spot defects occurred was denoted by "O". A sample in which bare-spot defects occurred was denoted by "×". A sample in which no bare-spot defects occurred and nonuniform coating appearance was obtained was denoted by "Δ". A ripple pattern is acceptable for interior panel components of automobiles. The bare-spot defects refer to regions where no coating is present and the steel sheet is exposed, each of the regions having a size of about several micrometers to about several millimeter.

Exfoliation resistance

Regarding the exfoliation resistance during severe forming, in the case of GA (steel sheet that was subjected to the alloying treatment), when GA is bent at an acute angle of more than 90°, the peeling of the coating in a bent portion needs to be inhibited. In this example, a cellophane tape was pressed against the bent portion at an angle of 120°. Separated matter was transferred to the cellophane tape. The amount of the separated matter on the cellophane tape was determined in terms of the number of counts for Zn measured by X-ray fluorescence spectrometry. Here, a mask had a diameter of 30 mm. In the fluorescent X-ray spectrometry, the acceleration voltage was 50 kV, the acceleration current was 50 mA, and the measurement time was 20 seconds. According to the following criteria, samples rated ranks 1 and 2 were evaluated as having good exfoliation resistance (symbol "O", and samples rated ranks 3 or more were evaluated as having poor exfoliation resistance (symbol "×").

| Number of counts for Zn measured by fluorescent X-ray spectrometry | Rank |
|---|---|
| 0 to less than 500: | 1 (good) |
| 500 or more to less than 1,000: | 2 |
| 1,000 or more and less than 2,000: | 3 |
| 2,000 or more and less than 3,000: | 4 |
| 3,000 or more: | 5 (poor) |

GI (steel sheet that was not subjected to the alloying treatment) needs to have good exfoliation resistance in an impact test. A ball impact test was performed. A formed portion (corresponding to the formed portion obtained by severe forming) was subjected to tape peeling. The presence or absence of peeling of the coated layer was visually determined. Regarding ball impact conditions, the weight of a ball is 1,000 g, and the drop height is 100 cm.

O (Good): the coated layer was not peeled.

× (NG): the coated layer was peeled.

Corrosion Resistance After Forming

Test pieces that were subjected to forming in the same way as in the exfoliation resistance test and that were not subjected to tape peeling were provided. Chemical conversion treatment was performed with a degreasing agent FC-E2011, a surface conditioner PL-X, and a chemical conversion coating agent Palbond PB-L3065, available from Nihon Parkerizing Co., Ltd., under standard conditions described below in such a manner that the chemical conversion coating weight was 1.7 to 3.0 g/m$^2$.

<Standard Conditions>

- Degreasing step: treatment temperature: 40°C, treatment time: 120 seconds
- Spray degreasing and surface conditioning step: pH: 9.5, treatment temperature: room temperature, treatment time: 20 seconds
- Chemical conversion treatment step: temperature of chemical conversion coating liquid: 35°C, treatment time: 120 seconds

The surfaces of each of the test pieces that had been subjected to the chemical conversion treatment were subjected to electrodeposition coating with an electrodeposition paint V-50, available from Nippon Paint Co., Ltd., in such a manner that the coating thickness was 25 μm. The resulting test piece was subjected to a corrosion test described below.

<Salt Spray Test (SST)>

Regarding the test pieces that had been subjected to the chemical conversion treatment and electrodeposition coating, a surface of the bent portion of GA and a portion of GI that had been subjected to impact by the ball were scored with a cutter in such a manner that the resulting cut lines reached the zinc coating. The test pieces were subjected to a salt spray test for 240 hours with an aqueous solution containing 5% by mass NaCl in conformity with a neutral salt spray test specified in JIS Z 2371:2000. Then, each of the cross-cut portions was subjected to a tape peeling test to measure the maximum peeling full width including both sides of the cut line portion. When the maximum peeling full width is 2.0 mm or less, the corrosion resistance in the salt spray test can be evaluated as good.

  ○ (Good): the maximum bulging full width from each cut line was 2.0 mm or less
  × (NG): the maximum bulging full width from each cut line was more than 2.0 mm

Table 3 lists the results.

Observation of Metallographic structure

A test specimen for microstructural observation was taken from each of the galvanized steel sheet. An L section (cross section parallel to the rolling direction) was polished and etched with nital. Three or more fields-of-view of positions about 1/4t (t represents the thickness of the sheet) from the surfaces were observed with a scanning electron microscope (SEM) at a magnification of ×3,000, and images thereof were analyzed (area percentages in the fields of view were measured, and the average area percentage was calculated). The average grain size of bainite was calculated using the images by a method in which grain diameters in two directions perpendicular to each other (the width direction and the longitudinal direction of the paper plane) were averaged arithmetically. Fig. 1 illustrates an example of the images.

Mn Content of Zinc Coated layer

The Mn content of the zinc coated layer was determined by dissolving the coated layer in dilute hydrochloric acid containing an inhibitor and measuring the Mn content using ICP emission spectrometry.

[Table 3]

| No. | Steel No. | Metallographic structure | | | | Mechanical properties | | | Surface | | | | Remarks |
|---|---|---|---|---|---|---|---|---|---|---|---|---|---|
| | | Ferrite % | Bainite and tempered martensite % | As-quenched martensite % | Average grain size of bainite μm | TS MPa | YS MPa | YR % | Amount of Mn in coating g/m² | Appearance | Exfoliation resistance during forming | Corrosion resistance after forming | |
| 1 | A | 15 | 55 | 30 | 4.0 | 960 | 660 | 69 | 0.04 | △ | ○ | ○ | Example |
| 2 | B | 10 | 65 | 30 | 3.8 | 990 | 721 | 73 | 0.03 | ○ | ○ | ○ | Example |
| 3 | C | 5 | 70 | 25 | 4.5 | 1010 | 750 | 74 | 0.04 | ○ | ○ | ○ | Example |
| 4 | D | 3 | 70 | 25 | 3.3 | 1005 | 730 | 73 | 0.03 | ○ | ○ | ○ | Example |
| 5 | E | 5 | 45 | 50 | 3.2 | 1150 | 775 | 67 | 0.03 | ○ | ○ | ○ | Example |
| 6 | F | 5 | 65 | 30 | 5.0 | 945 | 630 | 67 | 0.04 | ○ | ○ | ○ | Comparative example |
| 7 | G | 10 | 60 | 30 | 3.2 | 960 | 630 | 66 | 0.02 | × | × | × | Comparative example |
| 8 | H | 5 | 65 | 30 | 3.4 | 955 | 600 | 63 | 0.04 | ○ | ○ | ○ | Comparative example |
| 9 | C | 5 | 70 | 25 | 4.5 | 995 | 730 | 73 | 0.04 | ○ | ○ | ○ | Example |
| 10 | C | 5 | 70 | 25 | 4.5 | 1000 | 715 | 72 | 0.04 | △ | ○ | × | Comparative example |
| 11 | C | 5 | 70 | 25 | 4.5 | 1000 | 740 | 74 | 0.12 | × | × | × | Comparative example |
| 12 | C | 5 | 65 | 30 | 5.5 | 990 | 750 | 76 | 0.09 | × | × | × | Comparative example |
| 13 | C | 2 | 33 | 65 | 2.0 | 985 | 620 | 63 | 0.04 | △ | ○ | ○ | Comparative example |
| 14 | C | 5 | 70 | 25 | 2.1 | 1220 | 790 | 65 | 0.03 | ○ | ○ | ○ | Example |
| 15 | C | 45 | 30 | 20 | 2.1 | 790 | 480 | 61 | 0.03 | ○ | ○ | ○ | Comparative example |
| 16 | C | 5 | 65 | 30 | 5.0 | 985 | 705 | 72 | 0.02 | ○ | ○ | ○ | Example |

EP 3 409 807 B1

17

(continued)

| No. | Steel No. | Metallographic structure | | | | Mechanical properties | | | Surface | | | | Remarks |
|---|---|---|---|---|---|---|---|---|---|---|---|---|---|
| | | Ferrite % | Bainite and tempered martensite % | As-quenched martensite % | Average grain size of bainite μm | TS MPa | YS MPa | YR % | Amount of Mn in coating g/m² | Appearance | Exfoliation resistance during forming | Corrosion resistance after forming | |
| 17 | C | 0 | 40 | 60 | 5.5 | 1325 | 860 | 65 | 0.03 | ○ | ○ | ○ | Example |
| 18 | E | <u>30</u> | 60 | 10 | 3.4 | <u>800</u> | 700 | 88 | 0.04 | ○ | ○ | ○ | Comparative example |
| 19 | I | 5 | 70 | 25 | 3.2 | 995 | 725 | 73 | 0.04 | ○ | ○ | ○ | Example |
| 20 | J | 5 | 70 | 25 | 3.5 | 980 | 730 | 74 | 0.04 | ○ | ○ | ○ | Example |
| 21 | K | 5 | 70 | 25 | 3.4 | 985 | 750 | 76 | 0.04 | ○ | ○ | ○ | Example |
| 22 | L | 5 | 60 | 35 | 4.6 | 995 | 715 | 72 | 0.03 | ○ | ○ | ○ | Example |
| 23 | M | 5 | 70 | 25 | 5.1 | 1000 | 730 | 73 | 0.03 | ○ | ○ | ○ | Example |
| 24 | N | 5 | 70 | 25 | 5.2 | 1010 | 750 | 74 | 0.03 | ○ | ○ | ○ | Example |

* Values outside the range of the present invention are underlined.

The steel sheets that contain the components and that are produced under the production conditions within the scope of the present invention have a predetermined coating quality, TS ≥ 950 MPa, and YR ≥ 65%.

Industrial Applicability

The galvanized steel sheet of the present invention has high yield strength and good surface properties as well as high tensile strength. In the case where the galvanized steel sheet is used for frameworks of automobile bodies, in particular, mainly for cabins and their peripheries that affect crashworthiness, the safety performance is improved. Furthermore, the use of the higher-strength galvanized steel sheet having a smaller thickness is effective in reducing the weight of automobile bodies and offers the environmental advantages such as low $CO_2$ emission. Because of good surface properties and good coating quality, the galvanized steel sheet can also be positively used for portions such as underbodies, which can be corroded by rain or snow; thus, rusting resistance and corrosion resistance of automobile bodies should be improved. Because of these properties, the galvanized steel sheet is effectively used in the fields of civil engineering, construction, and household appliances as well as automobile parts.

**Claims**

1.   A high-yield-ratio high-strength galvanized steel sheet comprising:

   a steel sheet including:

   a composition containing, on a percent by mass basis:

      C: 0.12% or more and 0.25% or less;
      Si: less than 1.0%;
      Mn: 2.0% or more and 3% or less;
      P: 0.05% or less;
      S: 0.005% or less;
      Al: 0.1% or less;
      N: 0.008% or less;
      Ca: 0.0003% or less;
      0.01% to 0.1% in total of one or more of Ti, Nb, V, and Zr,

   optionally

      0.1% to 0.5% in total of one or more of Mo, Cr, Cu, and Ni, and/or B: 0.0003% to 0.005%, and
      Sb: 0.001% to 0.05%,
      the balance being Fe and unavoidable impurities, and

   a metallographic structure containing, by area percentage, 20% or less of ferrite, 40% or more in total of bainite and tempered martensite, and 60% or less of as-quenched martensite, the bainite having an average grain size of 6.0 μm or less; and
   a coated layer arranged on the steel sheet, the coated layer having a coating weight per side of 20 to 120 g/m$^2$ and having a Mn content of 0.05 g/m$^2$ or less; and
   a yield ratio of 65% or more and a tensile strength of 950 MPa or more.

2.   A method for producing a high-yield-ratio high-strength galvanized steel sheet, comprising:

   a hot-rolling step of heating a steel material having the composition according to claim 1 to 1,100°C or higher and 1,350°C or lower, hot-rolling the steel material at a finish rolling temperature of 800°C or higher and 950°C or lower, and coiling the resulting hot-rolled steel sheet at a temperature of 450°C or higher and 700°C or lower;
   a cold-rolling step of cold-rolling the hot-rolled steel sheet obtained in the hot-rolling step;
   an annealing step of annealing the cold-rolled steel sheet obtained in the cold-rolling step under conditions that a heating temperature T is in a temperature range of an Ac3 point to 950°C, an annealing furnace atmosphere has a temperature in the temperature range and a hydrogen concentration H of 5% or more by volume, a dew point D in the annealing furnace having a temperature in the temperature range satisfies expression (1) described below, a heating time in the temperature range of the Ac3 point to 950°C is 60 seconds or less, and a retention time in a temperature range of 450°C to 550°C is five seconds or more;
a galvanizing step of subjecting the annealed steel sheet obtained in the annealing step to coating treatment and cooling the resulting coated steel sheet to 50°C or lower at an average cooling rate of 5 °C/s or more to form a coating having a coating weight per side of 20 to 120 g/m$^2$; and
a skin-pass rolling step of subjecting the coated steel sheet obtained in the galvanizing step to skin-pass rolling at an elongation percentage of 0.1% or more,

$$-40 \leq D \leq (T - 1137.5)/7.5 \qquad (1)$$

where in expression (1), D represents the dew point (°C) in the annealing furnace, and T represents a temperature (°C) in the annealing furnace.

3. The method for producing a high-yield-ratio high-strength galvanized steel sheet according to claim 2, wherein the coating treatment is hot-dip galvanizing treatment or treatment in which hot-dip galvanizing is performed and then alloying is performed at a temperature of 450°C or higher and 600°C or lower.


**Patentansprüche**

1. Hochfestes verzinktes Stahlblech mit hohem Streckgrenzenverhältnis, das umfasst:
ein Stahlblech mit:

einer Zusammensetzung, die in einer Prozentmassebasis enthält:

C: 0,12% oder mehr und 0,25% oder weniger;
Si: weniger als 1,0%;
Mn: 2,0% oder mehr und 3% oder weniger;
P: 0,05% oder weniger;
S: 0,005% oder weniger;
Al: 0,1% oder weniger;
N: 0,008% oder weniger;
Ca: 0,0003% oder weniger;
0,01 % bis 0,1% insgesamt eines oder mehrerer von Ti, Nb, V und Zr,
optional
0,1% bis 0,5% insgesamt eines oder mehrerer von Mo, Cr, Cu, und Ni und/oder B: 0,0003% bis 0,005%, und
Sb: 0,001% bis 0,05%

wobei der Rest Fe und unvermeidliche Verunreinigungen sind, und
einer metallographischen Struktur, die nach Flächenprozentsatz 20% oder weniger Ferrit, insgesamt 40% oder mehr Bainit und gehärtetes Martensit und 60% oder weniger abgeschrecktes Martensit enthält, wobei das Bainit eine durchschnittliche Korngröße von 6,0 $\mu$m oder weniger hat; und
einer auf dem Stahlblech angeordneten aufgetragenen Schicht, wobei die aufgetragene Schicht ein Beschichtungsgewicht pro Seite von 20 bis 120 g/m$^2$ und einen Mn Gehalt von 0,05 g/m$^2$ oder weniger hat; und
einem Streckgrenzenverhältnis von 65% oder mehr und einer Zugfestigkeit von 950 MPa oder mehr.

2. Verfahren zur Herstellung eines hochfesten verzinkten Stahlblechs mit hohem Streckgrenzenverhältnis, das umfasst:

einen Warmwalzschritt zum Erwärmen eines Stahlmaterials mit der Zusammensetzung nach Anspruch 1 auf 1100°C oder höher und 1350°C oder niedriger, Warmwalzen des Stahlmaterials bei einer Fertigwalztemperatur von 800°C oder höher und 950°C oder niedriger, und Aufwickeln des daraus resultierenden warmgewalzten Stahlblechs bei einer Temperatur von 450°C oder höher und 700°C oder niedriger;
einen Kaltwalzschritt zum Kaltwalzen des im Warmwalzschritt gewonnenen warmgewalzten Stahlblechs;
einen Glühschritt zum Glühen des im Kaltwalzschritt gewonnenen kaltgewalzten Stahlblechs unter Bedingungen, dass eine Erwärmungstemperatur T in einem Temperaturbereich von einem Ac3 Punkt bis 950°C liegt, eine Glühofenatmosphäre eine Temperatur in dem Temperaturbereich und eine Wasserstoffkonzentration H von 5 Vol.-% oder mehr hat, ein Taupunkt D im Glühofen mit einer Temperatur im Temperaturbereich den nachfolgend beschriebenen Ausdruck (1) erfüllt, eine Erwärmungszeit im Temperaturbereich des Ac3 Punktes auf 950°C 60 Sekunden oder weniger beträgt und eine Verweilzeit in einem Temperaturbereich von 450°C bis 550°C fünf Sekunden oder mehr beträgt;

einen Verzinkungsschritt, bei dem das im Glühschritt gewonnene geglühte Stahlblech einer Beschichtungsbehandlung unterzogen wird und das daraus resultierende beschichtete Stahlblech bei einer durchschnittlichen Abkühlrate von 5°C/s oder mehr auf 50°C oder weniger abgekühlt wird, um eine Beschichtung mit einem Beschichtungsgewicht pro Seite von 20 bis 120 g/m$^2$ zu bilden; und

einen Nachwalzschritt, bei dem das im Verzinkungsschritt gewonnene beschichtete Stahlblech einem Nachwalzen mit einem Dehnungsprozentsatz von 0,1% oder mehr unterzogen wird,

$$-40 \leq D \leq (T - 1137{,}5) / 7{,}5 \ (1)$$

wobei in dem Ausdruck (1) D den Taupunkt (°C) im Glühofen und T eine Temperatur (°C) in dem Glühofen darstellt.

3. Verfahren zur Herstellung eines hochfesten verzinkten Stahlblechs mit hohem Streckgrenzenverhältnis nach Anspruch 2, wobei die Beschichtungsbehandlung eine Feuerverzinkungsbehandlung oder eine Behandlung ist, bei der eine Feuerverzinkung durchgeführt wird, und dann ein Legieren bei einer Temperatur von 450°C oder höher und 600°C oder niedriger durchgeführt wird.

**Revendications**

1. Tôle d'acier galvanisée à haute résistance et à taux de rendement élevé comprenant :
une tôle d'acier incluant :

une composition contenant, selon un pourcentage en masse :

C : 0,12 % ou plus et 0,25 % ou moins ;
Si : moins de 1,0 % ;
Mn : 2,0 % ou plus et 3 % ou moins ;
P : 0,05 % ou moins ;
S : 0,005 % ou moins ;
Al : 0,1 % ou moins ;
N : 0,008 % ou moins ;
Ca : 0,0003 % ou moins ;
0,01 % à 0.1 % en total d'un ou plusieurs de Ti, Nb, V et Zr,

facultativement

0,1 % à 0,5 % en total d'un ou plusieurs de MO, Cr, Cu et Ni, et/ou B : 0,0003 % à 0,005 %, et
Sb : 0,001 % à 0,05 %,
le solde étant du Fe et des impuretés inévitables, et
une structure métallographique contenant, en pourcentage de surface, 20 % ou moins de ferrite, 40 % ou plus en total de bainite et de martensite revenue, et 60 % ou moins de martensite à l'état trempé, la bainite présentant une granulométrie moyenne de 6,0 $\mu$m ou moins ; et
une couche de revêtement disposée sur la tôle d'acier, la couche de revêtement présentant un poids de revêtement par côté de 20 à 120 g/m$^2$ et présentant une teneur en Mn de 0,05 g/m$^2$ ou moins ; et
un taux de rendement de 65 % ou plus et une résistance en traction de 950 MPa ou plus.

2. Procédé pour produire une tôle d'acier galvanisée à haute résistance et à taux de rendement élevé, comprenant :

une étape de laminage à chaud de chauffe d'un matériau d'acier présentant la composition selon la revendication 1 à 1 100 °C ou plus et 1 350 °C ou moins, un laminage à chaud du matériau d'acier à une température de laminage de finition de 800 °C ou plus et 950 °C ou moins, et un bobinage de la tôle d'acier laminée à chaud résultante à une température de 450 °C ou plus et 700 °C ou moins ;
une étape de laminage à froid de laminage à froid de la tôle d'acier laminée à chaud obtenue à l'étape de laminage à chaud ;

une étape de recuit de recuit de la tôle d'acier laminée à froid obtenue à l'étape de laminage à froid dans des conditions où une température de chauffe T s'inscrit dans la plage thermique d'un point Ac3 à 950 °C, une atmosphère de four de recuit présente une température dans la plage thermique et une concentration d'hydrogène H de 5 % ou plus par volume, un point de rosée D dans le four de recuit présentant une température dans la plage thermique satisfait une expression (1) décrite ci-dessous, une durée de chauffe dans la plage thermique du point Ac3 à 950 °C est de 60 secondes ou moins, et une durée de rétention dans une plage thermique de 450 °C à 550 °C est de cinq secondes ou plus ;

une étape de galvanisation de soumission de la tôle d'acier recuite obtenue à l'étape de recuit à un traitement de revêtement et un refroidissement de la tôle d'acier revêtue résultante à 50 °C ou moins à un rythme de refroidissement moyen de 5 °C/s ou plus pour constituer un revêtement présentant un poids de revêtement par côté de 20 à 120 g/m$^2$ ; et

une étape de laminage de dressage de soumission de la tôle d'acier revêtue obtenue à l'étape de galvanisation à un laminage de dressage à un pourcentage d'allongement de 0,1 % ou plus,

$$-40 \leq D \leq (T - 1137,5)/7,5 \quad (1)$$

où dans une expression (1), D représente le point de rosée (°C) dans le four de recuit, et T représente une température (°C) dans le four de recuit.

3. Le procédé pour produire une tôle d'acier galvanisée à haute résistance et à taux de rendement élevé selon la revendication 2,

dans lequel le traitement de revêtement est un traitement de galvanisation à chaud ou un traitement dans lequel une galvanisation à chaud est effectuée et puis un alliage est effectué à une température de 450 °C ou plus et 600 °C ou moins.

# FIG. 1

SEI 15kV WD10mm SS50    x3000    5μm

FERRITE

MARTENSITE

TEMPERED
MARTENSITE

BAINITE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015093043 A1
- JP 2004323970 A
- JP 2004315960 A
- JP 2006233333 A
- JP 2010255106 A